# EUROPEAN PATENT SPECIFICATION

(11) **EP 2 771 754 B1**
(45) Date of publication and mention of the grant of the patent: **07.08.2019**
(21) Application number: 12843622.7
(22) Date of filing: 25.10.2012
(51) Int. Cl.: G05F 1/67

(54) **POWER CONDITIONING CIRCUIT TO MAXIMIZE POWER DELIVERED BY A NON-LINEAR GENERATOR**
LEISTUNGSREGELUNGSSCHALTUNG ZUR MAXIMIERUNG DER STROMABGABE DURCH EINEN NICHTLINEAREN GENERATOR
CIRCUIT DE CONDITIONNEMENT D'ÉNERGIE POUR PORTER AU MAXIMUM L'ÉNERGIE FOURNIE PAR UN GÉNÉRATEUR NON LINÉAIRE

(30) Priority: 25.10.2011 US 201161550922 P
(43) Date of publication of application: 03.09.2014
(73) Proprietor: Cameron, D. Kevin, Sunnyvale, California 94086 (US)
(72) Inventor: Cameron, D. Kevin, Sunnyvale, California 94086 (US)
(74) Representative: Derry, Paul Stefan
(86) International application number: PCT/US2012/061765
(87) International publication number: WO 2013/063175

(56) References cited:
- US-A- 4 510 434
- US-A- 4 794 272
- US-A- 5 221 891
- US-A- 5 493 204
- US-A1- 2006 164 065
- US-A1- 2008 122 449
- US-A1- 2011 205 773

## Description

### CROSS-REFERENCE TO RELATED APPLICATIONS.

This application claims priority to provisional application, US Serial No. 61/550,922 filed October 25th, 2011, entitled "POWER CONDITIONING CIRCUIT TO MAXIMIZE POWER DELIVERED BY A NON-LINEAR GENERATOR,".

### FIELD OF TECHNOLOGY

This disclosure relates generally to the technical fields of power electronics, and in one example embodiment, this disclosure relates to a method, apparatus and system of power conditioning for a non-linear generator.

### BACKGROUND

Renewable energy sources such as solar photovoltaic (PV) panels and wind generators have non-linear power output characteristics where neither maximum voltage nor maximum current correspond to maximum power output. Furthermore, such characteristics can vary with changing operational scenarios such as, for example, when PV panels are shaded by trees or other objects, when wind turbines are driven with changing wind speed and so on. These renewable energy sources can be referred to as uncontrolled energy power generators (UEPG). Electronics can manage these devices so that optimal power output is maintained under all conditions. Optimizing power generation from renewable sources is important because of the relatively high cost of equipment to harness these sources and the desire to maximize delivered power.

For example, f the output of a solar panel is monitored and its delivered power is calculated as the product of delivered current and voltage, then precision measurement of current and voltage is typically required. This in turn requires the use of sophisticated and costly electronics having the requisite precision and speed. More detail on a conventional solar photovoltaic power tracking system is provided in US Patent Number 6844739, filed January 18, 2005, entitled "MAXIMUM POWER POINT TRACKING METHOD AND DEVICE,".

Reference is made to US 5,493,204 which relates to negative impedance peak power tracker and to US 4,794,272 which relates to a power regulator utilizing only battery current monitoring.

### SUMMARY

A circuit, system, and method for conditioning power from a renewable power source are provided in accordance with claims 1, 7 and 10 respectively. The circuit receives variable voltage and current from the source and optimally loads the source to maximize power delivered into a DC bus having constant voltage. A boost circuit and synchronous rectifier having a variable duty cycle are controlled by a duty cycle controller to step up the voltage from the renewable source to the constant voltage of the DC bus. A feedback control circuit senses delivered load current and optimizes the duty cycle to maximize this current, and therefore maximize delivered power. The sense circuit relies upon the delivered power versus loading characteristic of the renewable source, which has a single maximum Advantageously, precision measurement of delivered current is not necessary in the present disclosure, just a relative measure of amplitude and phase, thus greatly reducing complexity and expense while increasing reliability and durability.

In one embodiment, an isolation transformer serves to isolate the renewable power source from the DC bus. In another embodiment, an arc fault sensor determines the presence of an electrical arc in, for example, a conduit and interrupts or shuts down the power conditioner to prevent physical damage due to arcing or fire.

The methods, systems, and apparatuses disclosed herein may be implemented in any means for achieving various aspects, and may be executed in a form of a machine-readable medium embodying a set of instructions that, when executed by a machine, cause the machine to perform any of the operations disclosed herein. Other features will be apparent from the accompanying drawings and from the detailed description that follows.

### BRIEF DESCRIPTION OF THE VIEW OF DRAWINGS

Example embodiments are illustrated by way of example and not limitation in the figures of the accompanying drawings, in which like references indicate similar elements and in which:
**Figure 1** is a functional block diagram of a system for conditioning the power supplied by a renewable power generator, according to one or more embodiments.
**Figure 2** is a schematic of a power conditioner circuit, according to one or more embodiments.
**Figure 3** is a graph of power transferred vs. duty cycle loading with dithering to detect a slope for peak power identification, according to one or more embodiments.
**Figure 4** shows a duty cycle adjustment system, according to one or more embodiments.
**Figure 5** is a power conditioner and isolation system, according to one or more embodiments.
**Figure 6** is a modular system having multiple parallely-coupled renewable energy power generators each having a local power conditioner, according to one or more embodiments.
**Figure 7** is a flowchart of operations to provide maximum delivered power by maximizing load current, according to one or more embodiments.

Other features of the present embodiments will be apparent from the accompanying drawings and from the detailed description that follows.

### DETAILED DESCRIPTION

A method, apparatus and system of a power conditioning circuit is disclosed. In the following description, for the purposes of explanation, numerous specific details are set forth in order to provide a thorough understanding of the various embodiments. It will be evident, however to one skilled in the art that various embodiments may be practiced without these specific details. Other features of the present embodiments will be apparent from the accompanying drawings and from the detailed description that follows.

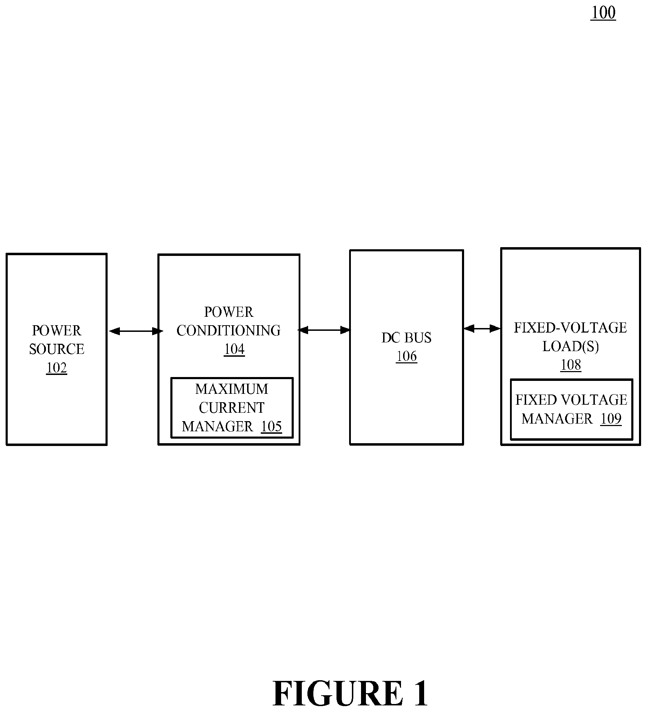

Referring to **Figure 1**, a functional block diagram of a system for interfacing a renewable energy source with a direct current (DC) bus is shown in accordance with one or more embodiments. Block 102 is a renewable-energy power source, also known as an uncontrolled energy power generator (UEPG), such as a solar photovoltaic (PV) panel, a wave generator, a wind turbine, etc. that is coupled to a power conditioner 104. The power conditioner 104 is coupled, in turn, to a DC bus 106 having a substantially constant voltage, as set by fixed-voltage load(s) 108 coupled thereto Power source 102 is nonlinear because its output current and voltage do not vary linearly with changing load. In addition, the output voltage, current and power of power source 102 vary with changing conditions, e.g., sun for solar panels, wind for wind turbines, waves for wave generators, etc. In order to deliver power from non-linear power source 102 onto the DC bus 106, power conditioner 104 stabilizes the voltage and maximizes the delivered power, i.e., by maximizing the load current. A maximum current manager 105 in power conditioning block 104 maximizes the load current by adjusting the operating point of the non-linear renewable power source 102.. The load current thereby acts as a proxy for the power. The resulting power delivered to the fixed-voltage load(s) 108 is a maximum power, because the product of a fixed voltage times a maximized current is a maximized power. By dividing the tasks of managing voltage and managing current amongst different responsible devices in system 100, the resulting operation and complexity of each of the responsible devices is greatly simplified, thereby resulting in a more cost-effective, robust and reliable system. The maximum current load manager 105 and the voltage manager 109 operate independently of each other, without requiring a power calculation to be performed by either of the managers or by another circuit. By avoiding power calculations, sophisticated computational circuitry, and accurate sensing equipment is eliminated, thereby reducing cost and complexity. Thus, the present disclosure provides maximum power point tracking (MPPT) by controlling only a single variable, e.g., current, of a plurality of variables, e.g., current and voltage, that comprises the output power.

Voltage manager 109 maintains an approximately fixed voltage on the DC bus 106 by sinking a range of load currents produced by the power conditioner 104. The sinking function is accomplished in one embodiment by adding or shedding loads as needed to maintain the voltage. Loads that store power, e.g., batteries, flywheels, thermal sinks, are useful load sinks to maintain approximately constant bus voltage at times of peak power output from the DC power source. Loads that are expendable, e.g., optional or luxury loads, are useful loads to shed for maintaining the approximately constant bus voltage at times of reduced power output from the DC power source. More detail regarding the voltage manager and fixed-voltage load(s) is provided in US application Serial No. 61/489263 filed May 24th, 2011, entitled "SYSTEM AND METHOD FOR INTEGRATING AND MANAGING DEMAND/RESPONSE BETWEEN ALTERNATIVE ENERGY SOURCES, GRID POWER, AND LOADS,".

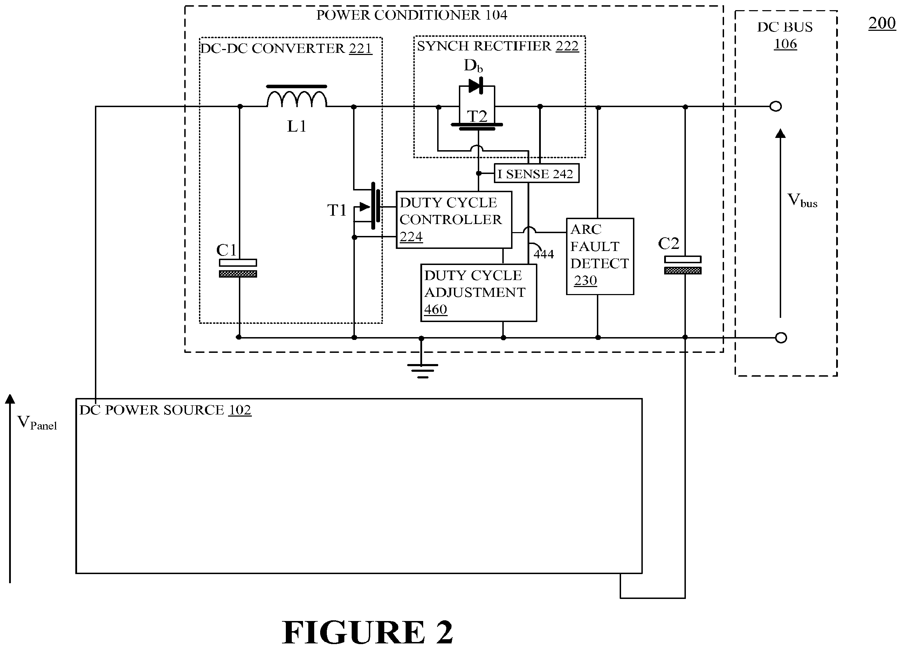

Referring now to **Figure 2****,** a schematic diagram is shown of a renewable electrical energy source and a power conditioning circuit according to one embodiment of the present invention. Power from a renewable power source 102, e.g., a solar panel, is transferred to a DC bus 106 output line that is held at an approximately fixed or tightly controlled voltage for consistent and reliable operation of downstream electrical devices. For example, for a 48-volt nominal bus voltage, the line voltage can fluctuate +/- 1 volt, or 2% to remain under the 50 volt maximum specified by the National Electric Code (NEC) for non-conduit wiring. In other systems, voltage fluctuation can be anywhere between 0.1% to 5%, depending on the sensitivity of the system, and the controls and sensors used to regulate the voltage. Under such conditions maximum power is transferred when the average current being transferred into DC bus 106 is maximized. The voltage supplied by renewable power source 102 is typically lower than the voltage of DC bus 106, but the supplied voltage may exceed the DC bus voltage in some scenarios. For example, 40V PV solar panels can be arranged in parallel then boosted up to 200V DC for a household lighting and appliance application or can be bucked down to 12V for a recreation vehicle (RV) or marine application.

According to one embodiment, DC-DC converter 221 and a synchronous rectifier 222 are used to transfer energy from renewable power source 102 to DC bus 106. The DC-DC converter 221 is configured as a boost circuit, utilizing inductor L1 and switching transistor T1, whose conducting cycle timing, i.e., on time and off time, is continually controlled by duty cycle controller 224 (DCC), also known as a pulse width modulation (PWM) controller. The DCC modulates an operating point of the DC power source by varying a PWM duty cycle that in turn varies the load current that is output on the output line. The ratio of the on time to off time is referred to as the duty cycle. A duty cycle adjustment circuit 460 (DCAC) in turn drives a duty cycle controller 224 (DCC). During the on time, a magnetic field builds up in L1, and energy is stored therein. During the off time, the magnetic field in L1 collapses, causing L1 to release stored energy to synchronous rectifier 222. During this off time, duty cycle controller 224 turns transistor T2 on, such that T2 passes energy to DC Bus 106. Consequently, the amount of energy transferred in a given cycle is proportional to the integral of the current with respect to time for that cycle, given that the voltage of DC Bus 106 is substantially constant. It should be noted that duty cycle controller 224 and duty cycle adjustment circuit 460 may be implemented as a common circuit or as a module.

The cycle time of duty cycle controller 224 is not critical and can vary according to design considerations. In one embodiment, the cycle time is set to ten microseconds. In other embodiments, the cycle time is between 0.1-1000 microseconds.

According to one embodiment, transistors T1 and T2 are power metal oxide semiconductor field effect transistors (MOSFETs) that operate in Ohmic mode during conduction. Under such condition, MOSFETs operate substantially linearly, such that the source-to-drain voltage is substantially proportional to the source-to-drain current. Thus, by monitoring and maximizing the source-to-drain voltage of T2 under such condition, the power delivered to DC bus 106 can be maximized. Power MOSFETs typically include an internal diode Db, sometimes referred to as a body diode. According to one embodiment, during the on time of T2, its source-to-drain voltage is lower than the conduction threshold voltage of Db, and thus Db does not pass energy to DC Bus 230 and serves merely as a safety device to limit power dissipated by T2. In addition, should the voltage of renewable source 102 exceed that of DC bus 106, Db can serve as a bypass to deliver power from inductor L1 directly to DC Bus 106. Persons skilled in the art will appreciate that devices having other technologies can be substituted for T1 and T2, such as, for example, bipolar transistors, thyristors, silicon controlled rectifiers (SCRs) and so on.

A current sensor 242 (I sense) is coupled across transistor T2 of synchronous rectifier 222 to determine a relative amount of current conducted through T2 by measuring the voltage drop across T2 and generating a proportional current signal 444 that is transmitted to duty cycle adjustment block 460. Input from duty cycle controller 224 to I sense 242 indicates when T2 is conducting and when the voltage drop measurement can be taken. Thus, the present embodiment does not measure output voltage or current from the DC power source 102 and does not measure the voltage output from the DC-DC converter 221. The present embodiment only measures the load current from the power conditioner 104. In addition, the present disclosure does not require a dedicated sensor to measure that load current. Rather, transistor T2 is reused for multiple purposes of switching and of load current sensing, thereby reducing cost, complexity, and the quantity of elements in the circuit. However, in another embodiment, a dedicated current sensor can be used, and specifically a cheaper and less accurate current sensor can be used for measuring current and phase change of the load current. Arc fault detector 230 coupled between the high voltage line to ground on the output of the power conditioner 104, would send a signal to the duty cycle controller 224 to close and thus provide a closed circuit to the DC power source, e.g., a PV solar panel would thus self-regulate by its internal resistance. The arc fault detector 230 avoids providing power to an arc fault.

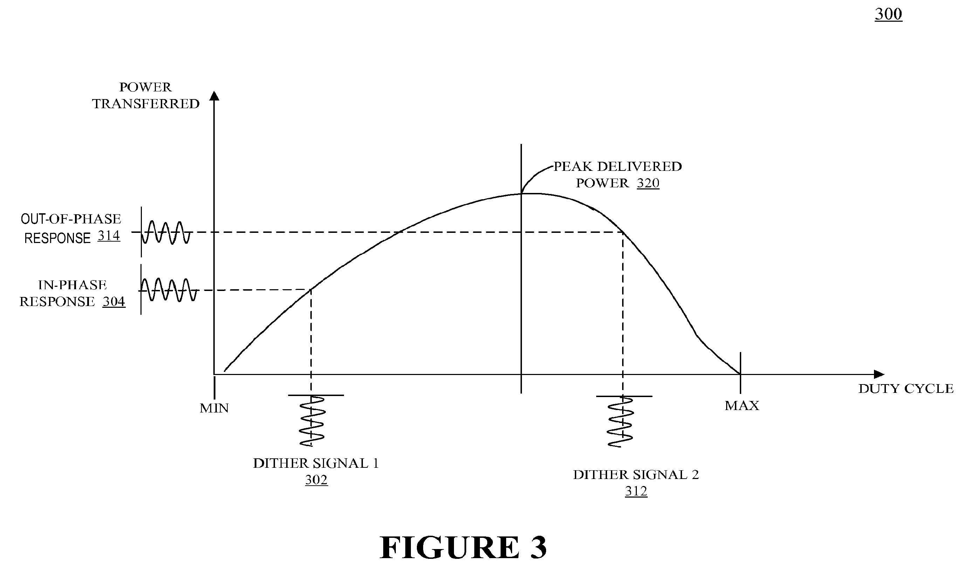

Referring now to **Figure 3****,** a characteristic curve 300 is shown that relates the average power transferred by power conditioner 104 versus duty cycle as defined above. When the duty cycle is at a minimum, i.e., on time relative to off time is minimal, relatively little conduction occurs through T1, and thus, relatively little energy is stored in L1 and transferred to DC bus 106. As the duty cycle increases, L1 stores more energy per duty cycle, and thus more energy and power are transferred to DC bus 106. At a certain point, increasing the duty cycle causes a decrease in supplied energy per cycle. This is a consequence of the internal resistance of renewable power source 102. For purposes of maximum power transfer from renewable power source 102 to DC Bus 106, there is thus an optimum duty cycle corresponding to maximum load current operating point 320, which corresponds to a peak delivered power to a fixed voltage load

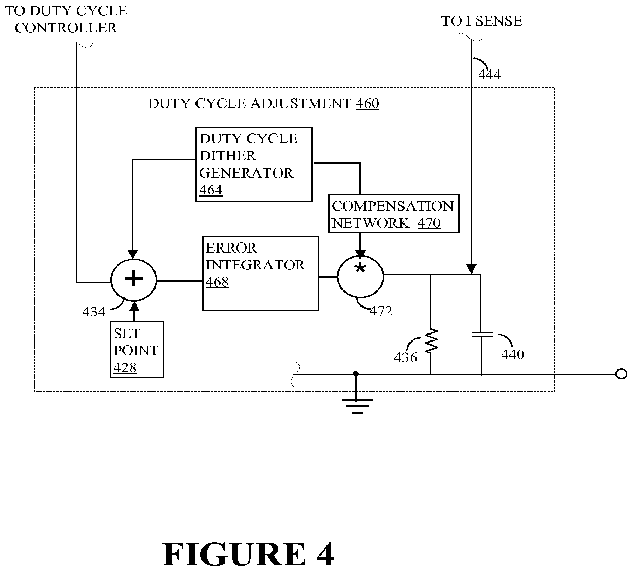

Referring now to **Figure 4****,** a duty cycle adjustment system is shown according to one or more embodiments. Duty cycle adjustment system 460 includes a duty cycle set point block 428 coupled to adder 434 and thereafter to duty cycle controller 224 for initiating a starting duty cycle for power conditioner system 104 upon startup. A duty cycle dither generator 464 is also coupled to adder 434 and thereafter to duty cycle controller 224 to add a slight dither to the duty cycle of PWM controller and thereby determine the slope of curve 300 at which the load current is presently operating a. For example, the dither can be performed at 1 kHz in one embodiment, as compared to a duty cycle controller switching frequency for the T1 switching transistor of 100 kHz, though a wide variety of frequencies can be used. This dither will initially be with respect to the operating point determined by duty cycle set point circuit 460. For example, referring back to Figure 3, introducing dither signal 302 at the point shown on the positive slope of curve 300 results in an in-phase response 304, The response is in-phase because as dither signal 302 rises, the value of power transferred 304 also rises and as dither signal 302 drops, the value of power transferred 304 also drops On the other hand, introducing dither signal 312 at the operating point on the negative slope of curve 300 results in an out-of-phase response 314 The response is out-of-phase because as dither signal 312 rises, the power transferred 314 drops and as dither signal 302 drops, the power transferred 304 rises. Thus, by sensing the phase relationship between the dither signal and the corresponding variation in delivered load current, it can be determined on which side of peak power 320 that power conditioner 220 is operating. Because the voltage of DC Bus 106 is substantially constant, the current delivered into it will be proportional to power delivered into it. Specifically, power equals load current times load voltage, and the load voltage is constant in the present embodiment. The current and the voltage are the components of power. Hence, the load current becomes a proxy for the power. Thus, for purposes of sensing phase as described above, power conditioner 104 merely needs to monitor the current flowing through device T2 and compare the phase of such current with that of the signal supplied by duty cycle dither generator 428.

**Figure 4** also provides a feedback loop for adjusting the duty cycle from the set point toward the maximum load current operating point. Current sensing circuit 242 of **Figure 2** generates a current 444 that is proportional to the current conducted by transistor T2 and communicates the proportional current 444 to resistor 436, thereby supplying a proportional feedback voltage to multiplier 472. Filter capacitor 440 removes undesirable noise from this voltage. Multiplier 472 is coupled to duty cycle dither generator 464 to multiply the feedback voltage by the same dither signal voltage provided to the duty cycle controller 224. The output of multiplier 472 will be of one polarity when the current delivered to the DC bus 106 is in phase with the dither signal, and will be of the opposite polarity when the current delivered to DC bus 106 is out of phase with the dither signal. Error integrator 468 continually integrates the output of multiplier 472 to produce an error signal that is summed by adder 434 with the output of dither generator 464 and fed to duty cycle controller (DCCC) circuit 224. In other words, the output of error integrator 468 becomes an updated set point for DCC 224. Duty cycle adjustment circuit 460 thus comprises a feedback control circuit that drives the power delivered to DC bus 106 to a maximum load current operating point 320, and resultantly a maximum power operating point independent of, and without controlling, an output voltage of the DC-DC converter circuit, e.g., assuming a fixed voltage bus 106 Because the maximum power operating point is achieved using relative measurements of amplitude and phase of dithered load current, rather than power calculations, the present embodiment does not require expensive analog-to-digital converters (ADC) to make precision calculations of current and voltage to accurately determine power. However, in another embodiment, the present disclosure can utilize an ADC, and specifically a cheaper ADC with less accuracy than that used for other MPPT approaches.

The dither signal can be any of a variety of waveforms. If it is symmetric, having a 50/50 duty cycle with a zero average such as a sine, triangle, or square wave, then multiplier 472 can be implemented as a simple polarity switch. The polarity switch implementation would transform the phase and amplitude oscillation of the load current to a DC feedback signal by toggling with the polarity of the dither signal in order to correlate the base frequency with the feedback, where harmonic effects are negligible. For example, if the signal output by dither generator 464 to multiplier 472 is a positive polarity, signal 444 is simply passed unchanged; if the signal output by dither generator 464 to multiplier 472 is a negative polarity, signal 444 is inverted. Thus, for a given dither cycle, error integrator 468 will accumulate in increments proportional to the slope of curve 300 over which the load current is dithered. The dither signal is set large enough to make detection of the phase reliable and small enough so that it does not have a significant effect on efficiency or loop stability. In one embodiment, the peak-to-peak percentage change in duty cycle due to dither is one percent. Persons skilled in the art will appreciate that variations in dither magnitude are possible to accommodate a range of desired loop stability characteristics, and that loop compensation can be proportional, integral, derivative and combinations thereof. A small dither signal can be used to avoid straying too far from peak power, but this may also result in tracking a local maximum rather than the global maximum on larger PV panel systems. This can be avoided by occasionally increasing the amplitude of the dither, e.g., up to 20%, and then letting it subside (slowly) back to the normal low level, e.g., 1%, where it would remain most of the time, e.g., 99% of the time. However, the actual time duration and amplitude settings would depend on how many PV cells are in series and on the shape of the power curve. The smooth and single maximum curve illustrated in Figure 3 represents a single PV cell, or multiple PV cells in parallel. If more panels are coupled in series, then a resulting power curve would likely have multiple peaks, including a global maximum and local maxima, which might lead the MPPT to track a local maximum rather than the global maximum, thereby leading to a suboptimal power production.

An optional compensation network 470 is coupled between the cycle dither generator 464 and multiplier 472 to match, or synchronize, any time constant delay of the DC power source 102, using resistive and capacitive elements. The compensation network is sometimes useful because renewable energy sources such as solar panels have an associated time constant, such that changes in loading that occur faster than such time constant will cause relatively low output voltage change, while changes in loading that are slower than such time constant will cause more significant change in output voltage. This time constant may be conceptually considered to result from an equivalent capacitance internal to renewable power source 102. The period of the dither will depend on the time constant of the renewable power source 102, and should be substantially greater than this time constant. For example, if renewable source 102 has an effective time constant of one second, the dither period should be at least several seconds. Lower dither periods can be accommodated by inserting a delay of duration similar to the time constant of renewable source 102 between dither generator 464 and multiplier 472. This will tend to compensate for the effective time delay introduced to the other input of multiplier 472 due to the time constant of renewable power source 102. Using a well-matched compensation network 470, the power conditioner circuit 104 can use a faster dither signal that would result in a quicker feedback response, and a closer tracking of the maximum load current operating point, e.g., with less lag.

The circuitry of duty cycle adjustment circuit 460 may be implemented using either digital or analog components, noting that precision measurement of delivered current is not required as long as the feedback loop effectively drives the system to optimum operating point 320. The DCCC 224 and/or DCCA 460 uses only analog components in one embodiment, and mostly analog components with only nominal token digital CMOS components in another embodiment, to set and adjust the duty cycle. This is because extensive digital circuits are not required to perform a power calculation and not required to implement sophisticated algorithms to track an actual maximum power point in the present disclosure. For the same reasons, the present disclosure requires neither circuitry having software programmability, nor an arithmetic logic unit (ALU) for arithmetic operations, nor a CPU for performing software-implemented programs. In one embodiment, power conditioner circuit 104 is integrated on a single semiconductor die because of the simplicity of the components and design.

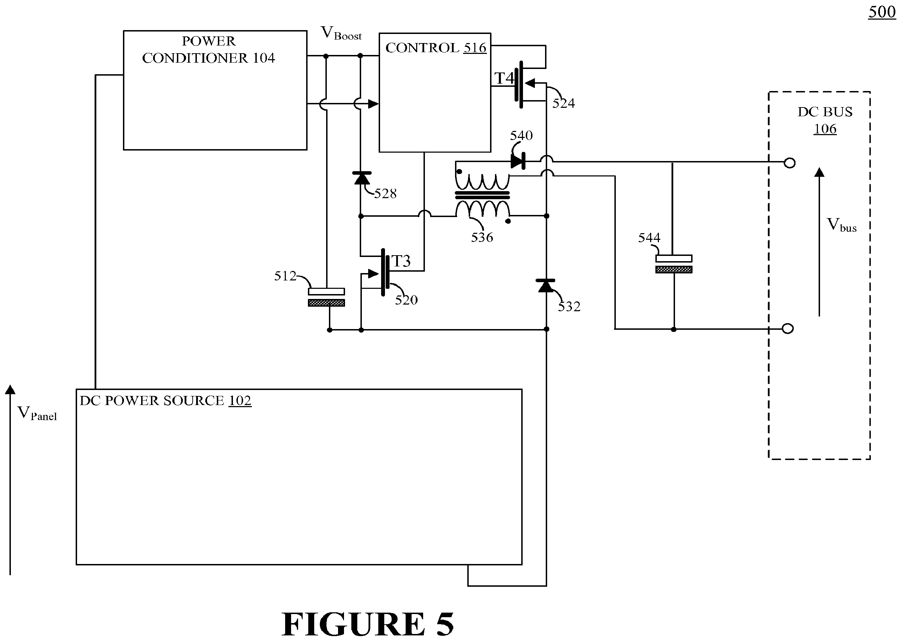

Referring now to **Figure 5****,** a power conditioner and isolation system is shown, according to one or more embodiments. In some applications, isolation between the renewable source 102 and DC bus 106 is desirable or required. Power Conditioner 104 performs the functions accomplished by DC-DC converter and duty cycle optimization circuit as described above. Isolation transformer 536 and the associated components shown form a DC power supply. Based on a timing signal received from Power Conditioner 104, control circuit 516 periodically turns on and off FETs 520 and 524, energizing an de-energizing the primary of isolation transformer 536. When the FETs are off, flyback diodes 528 and 532 return current created by the stray inductance of the primary winding of isolation transformer 536. Transformer 536 thus supplies an alternating current that is rectified and filtered by diode 540 and capacitor 544, respectively. This configuration is sometimes referred to as a "two-switch forward topology."

The power transferred to DC bus 106 can then be estimated by measuring the voltage across either of transistors 520 and 524, which conduct in Ohmic mode as discussed above. Transformer 536 may be used to "step up" the voltage from lower voltage sources via a non-unity turns ratio. For example, for PV panels operating at 40 V and DC bus 106 having voltage of 200 V, power conditioner 104 would boost the panel voltage to 50V, and transformer 536 would provide the further step-up via a 1:4 turns ratio. Alternatively, transformer 536 could be a 1:1 ratio for providing an isolation function with no step-up voltage, or an N:1 ratio for an isolation function combined with a step-down voltage, where N is any desired step down ratio. Control electronics 516 could be integrated with the boost chopper 508 electronics for convenience and efficiency. Isolation transformer 536 is provided for safety reasons, to isolate DC power source 102 from potential loads or other sources, such as a utility power grid. The duty cycle of the power conditioner 104 is fixed and not variable like those in Figures 2 and 4. In the present embodiment, the duty cycle is fixed at 50%, though a wide range of other duty cycles can be used.

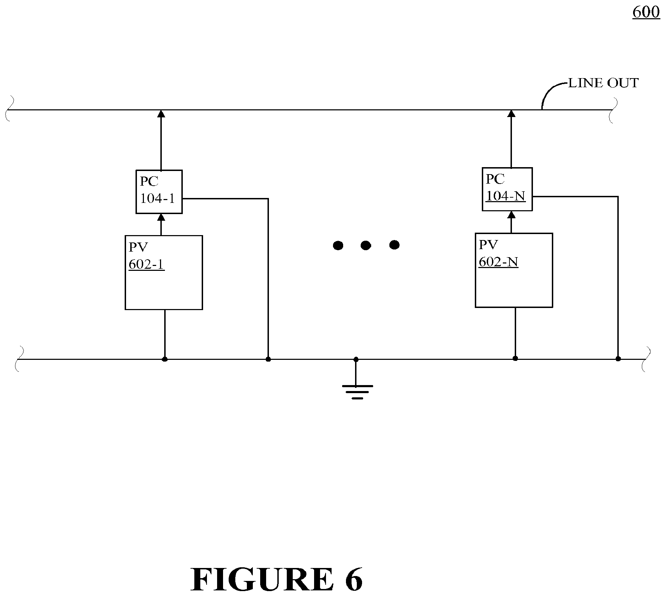

**Figure 6** is a modular system having multiple renewable energy power generators 602-1 through 602-N coupled in parallel where N is any value ≥ 2, each including a dedicated a local power conditioner, 104-1 through 104-N, according to one or more embodiments. This system provides modularity, with each renewable energy power generator having the capability of being removed or added to the system, since it includes its own power conditioner, a central power conditioner with limited ratings would not restrict the quantity of power generators added to the system. Furthermore, the redundancy of power conditioners would allow graceful degradation and failure mode, with a single power conditioner failure only removing the associated power generator, and not multiple power generators or all the power generators. Arc fault detection functions in each of the power conditioners would include a threshold time to detect an arc fault plus an approximately equal buffer time to ensure arc fault detectors in parallel DC power sources have had an opportunity to register the arc fault, and thus avoid a scenario where all DC power goes through the first circuit that detected the fault thereby overloading it.

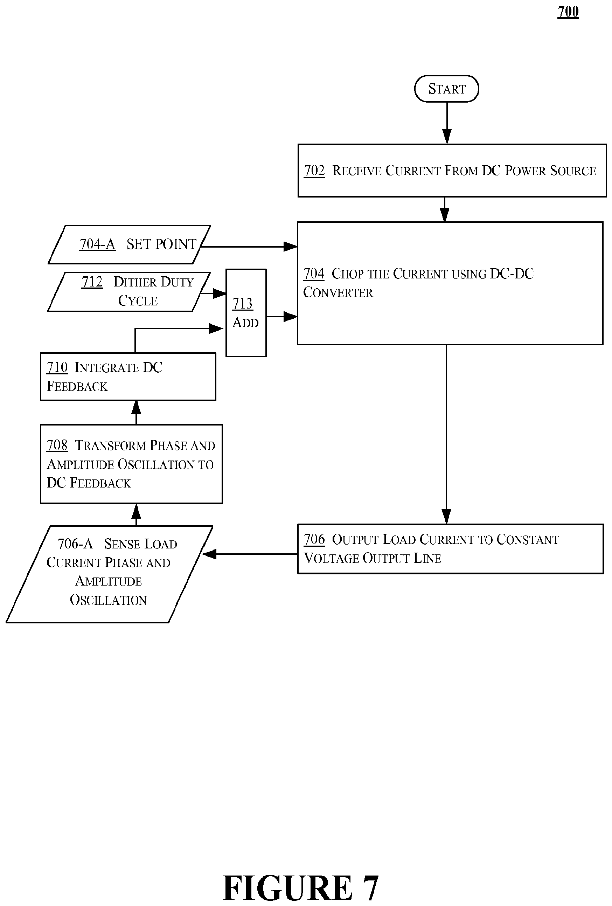

Referring now to **Figure 7****,** a flowchart 700 of operations to provide maximum delivered power by maximizing load current, is shown according to one or more embodiments. By using the method described in flowchart 700, an inexpensive, robust and effective means of maximizing output power is provided from a renewable energy power source. Operation 702 receives current form a DC power sources, such as a renewable energy uncontrolled energy power generator (UEPG). In operation 704, the current is chopped using a DC-DC converter. While the present embodiment illustrated above implements the DC-DC converter as a boost circuit, the present disclosure is well suited to utilizing a DC-DC converter configured as a buck circuit, or a boost-buck circuit. A duty cycle set point 704-A is input to operation 704 for initiating the pulse width modulation. Thereafter, feedback is provided as subsequently described in operations 706-A through 712. Next, operation 706 provides an output load current to a constant voltage output line, and ultimately, to an approximately fixed voltage load sink, as shown in Figure 1. Output 706-A from operation 706 senses the phase and amplitude oscillation of the load current and creates a DC feedback signal, as described in Figures 2-4. The DC feedback signal is integrated in operation 712 and added with the dither input 712 to be input back to operation 704, for adjusting the duty cycle of the DC-DC converter.

As a practical implementation of method 700, if the operating point of the duty cycle is determined to have a positive slope, e.g., shown in Figure 3, then the duty cycle is increased to approach the peak delivered power point 320. If the operating point of the duty cycle is determined to have a negative slope, then the duty cycle is decreased to approach the peak delivered power point 320. When slope is steep the feedback voltage high and adjustment to duty cycle is large. When the slope is zero, or flat, then the duty cycle is operating at an inflection point where the load current is a maximum on the curve, and the current that is measured on either side of the maximum averages to approximately zero change, and thus feedback is zero, thus maintaining the duty cycle at the maximum load current operating point. While the goal of the process and apparatus is to provide a maximum load current operating point, it is understood that much of the time, the system will provide a load current that is reasonably close to the maximum load current operating point to capture approximately the maximum power from the DC power source. The dithering occurs continually, as does the feedback and adjustment, error integration, etc. Because the uncontrolled nature of renewable energy makes the DC power sources very susceptible to power fluctuations at any time. Persons skilled in the art will appreciate that other applications may be accommodated by the circuits and methods disclosed. For example, if a low-voltage battery, such as, , a twelve-volt deep-cycle battery for example, is the fixed voltage load 108, and the DC power source is a 40V PV panel, then a buck circuit can be substituted for boost circuit 221. Current delivered to such battery can be measured via an alternative sensing circuit. For example, with regard to power transfer curve 300, if maximum power delivered to such battery corresponds to maximum battery voltage, the latter could be monitored and used as the basis for sensing delivered power and determining peak delivered power 320.

Methods and operations described herein can be in different sequences than the exemplary ones described herein, e.g., in a different order. Thus, one or more additional new operations may be inserted within the existing operations or one or more operations may be abbreviated or eliminated, according to a given application.

Other features of the present embodiments will be apparent from the accompanying drawings and from the detailed description. In addition, it will be appreciated that the various operations, processes, and methods disclosed herein may be carried out, at least in part, by processors and/or electrical user interface controls under the control of computer readable and computer executable instructions stored on a computer-usable storage medium. The computer readable and computer executable instructions reside, for example, in data storage features such as computer usable volatile and non-volatile memory and are non-transitory. However, the non-transitory computer readable and computer executable instructions may reside in any type of computer-usable storage medium.

## Claims

1. A power conditioner circuit (104) for conditioning power received from a DC power source (102), the power conditioner circuit comprising:
an input line coupled to receive power from the DC power source;
an output line to output power to an external bus load (106), wherein the output line is controlled at an approximately fixed voltage; and
a DC-DC converter circuit (221) coupling the input line to the output line, and configured to provide a load current to the external bus load for generating a maximum output power for the external bus load without requiring circuitry to perform a power calculation; and wherein
the DC-DC converter circuit is configured to maximize the load current independently of a voltage of the output line; and
the DC-DC converter circuit is configured to control only a single variable of a load current output from the power conditioner in order to maximize the load current output from the power conditioner circuit.

2. The circuit of claim 1 wherein the maximum output power generated by the DC-DC converter circuit is provided to the external bus load without requiring a dedicated sensor to measure a current or a voltage of the DC power source.

3. The circuit of claim 1 wherein the DC-DC converter further comprises:
a duty cycle controller circuit (DCCC) (224) configured to modulate an operating point of the DC power source by varying a pulse width modulated (PWM) duty cycle that in turn varies the load current that is output on the output line;
a duty cycle adjustment circuit (DCAC) (460) coupled to the duty cycle controller circuit wherein the DCAC circuit is further configured to set an initial duty cycle then dither the duty cycle of the PWM signal; and
a feedback circuit coupled to the duty cycle adjustment circuit, wherein the feedback circuit senses a phase and an amplitude oscillation of the load current caused by the continually dithered duty cycle, the feedback circuit configured to provide an error signal to the duty cycle adjustment circuit for adjusting the duty cycle to track the maximum load current operating point.

4. The circuit of claim 3 wherein the feedback circuit uses analog components to adjust the duty cycle without having to perform a power calculation and generates the error signal by integrating the phase and amplitude oscillations of the load current correlated against the original dither signal.

5. The circuit of claim 1 further comprising:
a compensation/delay network disposed in the feedback circuit, wherein the compensation/delay network is configured to synchronize the feedback signal.

6. The circuit of claim 1 further comprising:
an isolation transformer coupled between the DC-DC converter circuit and the output line, the isolation transformer for boosting an output voltage of the DC-DC converter to the approximately fixed voltage of the output line, and the isolation transformer providing an isolation function of the DC power source from the output line.

7. A power generator system comprising:
a DC power source (102); and
a power conditioner (104) circuit according to claim 1.

8. The system of claim 7 further comprising:
a constant voltage load sink system coupled to the output line of the power generator system wherein the load sink system varies a load draw current such that an output line voltage is maintained at the approximately fixed voltage.

9. The system of claim 7 further comprising:
a plurality of DC power sources coupled in parallel to a DC bus, wherein each of the plurality of DC power sources includes a dedicated local power conditioner.

10. A method of conditioning power from a DC power source to an output line using a power conditioner, the method comprising:
receiving (702) a current from the DC power source;
chopping (704) the current at a duty cycle using a DC-DC converter;
outputting (706) a load current on the output line, wherein the output line is controlled at an approximately constant voltage; and
adjusting the duty cycle of the DC-DC converter to maximize the load current on the output line; and wherein:
the maximizing operation of the load current is independent of a voltage of the output line; and
the DC-DC converter circuit is configured to control only a single variable of a load current output from the power conditioner in order to maximize the load current output from the power conditioner circuit.

11. The method of claim 10 further comprising:
sensing an oscillation of the load current on the output line caused by dithering the duty cycle, wherein:
a load current whose oscillation is in-phase with the dither cycle represents an undershoot before the maximum current point with an associated positive feedback to a duty cycle controller (224) to increase the duty cycle;
a load current whose oscillation is out-of-phase with the dither cycle represents an overshoot beyond the maximum current point with an associated positive feedback to a duty cycle controller (224) to decrease the duty cycle; and
a load current whose oscillation is an average of zero represents an operation at the maximum current point that produces the maximum load current with an associated zero feedback to maintain the present duty cycle.

12. The method of claim 11 further comprising:
integrating the feedback from the duty cycle adjustment circuit continuously to accommodate changing operating conditions of the DC power source; and
adjusting the duty cycle of the duty cycle controller, based on the integrating operation of the feedback signal so as to maintain the load current at the maximum current point.

13. The method of claim 10 further comprising:
synchronizing a feedback signal by delaying the feedback signal an amount of time comparable to a response time of the DC power source.

14. The method of claim 10 further comprising:
occasionally increasing the amplitude of the dither to identify if a global maximum exists beyond a local maximum.

## Patentansprüche

1. Leistungskonditionierschaltung (104) zum Konditionieren von Leistung, die von einer DC-Leistungsquelle (102) empfangen wird, wobei die Leistungskonditionierschaltung Folgendes umfasst:
eine Eingangsleitung, die gekoppelt ist, um Leistung von der DC-Leistungsquelle zu empfangen;
eine Ausgangsleistung zum Ausgeben von Leistung an eine externe Buslast (106), wobei die Ausgangsleitung bei einer annähernd festen Spannung gesteuert wird; und
eine DC-DC-Wandlerschaltung (221), die die Eingangsleitung an die Ausgangsleitung koppelt und konfiguriert ist, um der externen Buslast einen Laststrom bereitzustellen, um eine maximale Ausgangsleistung für die externe Buslast zu erzeugen, ohne dass Schaltung erforderlich ist, um eine Leistungsberechnung durchzuführen; und wobei
die DC-DC-Wandlerschaltung konfiguriert ist, um den Laststrom unabhängig von einer Spannung der Ausgangsleitung zu maximieren; und
die DC-DC-Wandlerschaltung konfiguriert ist, um nur eine einzelne Variable eines Laststromausgangs von dem Leistungskonditionierer zu steuern, um den Laststromausgang von der Leistungskonditionierschaltung zu maximieren.

2. Schaltung nach Anspruch 1, wobei die durch die DC-DC-Wandlerschaltung erzeugte maximale Ausgangsleistung der externen Buslast bereitgestellt wird, ohne dass ein dedizierter Sensor erforderlich ist, um einen Strom oder eine Spannung der DC-Leistungsquelle zu messen.

3. Schaltung nach Anspruch 1, wobei der DC-DC-Wandler ferner Folgendes umfasst:
eine Arbeitszyklussteuerschaltung (DCCC) (224), die konfiguriert ist, um einen Betriebspunkt der DC-Leistungsquelle zu modulieren, indem ein impulsbreitenmodulierter (PWM) Arbeitszyklus variiert wird, der wiederum den Laststrom variiert, der an der Ausgangsleitung ausgegeben wird;
eine Arbeitszykluseinstellungsschaltung (DCAC) (460), die an die Arbeitszyklussteuerschaltung gekoppelt ist, wobei die DCAC-Schaltung ferner konfiguriert ist, um einen anfänglichen Arbeitszyklus festzulegen und dann den Arbeitszyklus des PWM-Signals zu dithern; und
eine Rückkopplungsschaltung, die an die Arbeitszykluseinstellungsschaltung gekoppelt ist, wobei die Rückkopplungsschaltung eine Phasen- und eine Amplitudenoszillation des Laststroms bewirkt durch den kontinuierlich geditherten Arbeitszyklus erfasst, wobei die Rückkopplungsschaltung konfiguriert ist, um der Arbeitszykluseinstellungsschaltung ein Fehlersignal bereitzustellen, um den Arbeitszyklus einzustellen, um den maximalen Laststrombetriebspunkt zu verfolgen.

4. Schaltung nach Anspruch 3, wobei die Rückkopplungsschaltung analoge Komponenten verwendet, um den Arbeitszyklus einzustellen, ohne eine Leistungsberechnung durchführen zu müssen, und das Fehlersignal erzeugt, indem die Phasen- und Amplitudenoszillationen des Laststroms korreliert gegen das ursprüngliche Dithersignal integriert werden.

5. Schaltung nach Anspruch 1, ferner umfassend:
ein Kompensations-/Verzögerungsnetzwerk, das in der Rückkopplungsschaltung angeordnet ist, wobei das Kompensations-/Verzögerungsnetzwerk konfiguriert ist, um das Rückkopplungssignal zu synchronisieren.

6. Schaltung nach Anspruch 1, ferner umfassend:
einen Isolationstransformator, der zwischen der DC-DC-Wandlerschaltung und der Ausgangsleitung gekoppelt ist, wobei der Isolationstransformator dem Steigern einer Ausgangsspannung des DC-DC-Wandlers zu der annähernd festen Spannung der Ausgangsleistung dient und der Isolationstransformator eine Isolationsfunktion der DC-Leistungsquelle von der Ausgangsleitung bereitstellt.

7. Leistungsgeneratorsystem, umfassend:
eine DC-Leistungsquelle (102); und
eine Leistungskonditionierschaltung (104) nach Anspruch 1.

8. System nach Anspruch 7, ferner umfassend:
ein Konstantspannungslastsinksystem, das an die Ausgangsleitung des Leistungsgeneratorsystems gekoppelt ist, wobei das Lastsinksystem einen Lastentnahmestrom variiert, sodass eine Ausgangsleitungsspannung bei der annähernd festen Spannung gehalten wird.

9. System nach Anspruch 7, ferner umfassend:
eine Vielzahl von DC-Leistungsquellen, die parallel an einen DC-Bus gekoppelt ist, wobei jede aus der Vielzahl von DC-Leistungsquellen einen dedizierten lokalen Leistungskonditionierer beinhaltet.

10. Verfahren zum Konditionieren von Leistung von einer DC-Leistungsquelle zu einer Ausgangsleitung unter Verwendung eines Leistungskonditionierers, wobei das Verfahren Folgendes umfasst:
Empfangen (702) eines Stroms von der DC-Leistungsquelle;
Zerhacken (704) des Stroms an einem Arbeitszyklus unter Verwendung eines DC-DC-Wandlers;
Ausgeben (706) eines Laststroms an der Ausgangsleitung, wobei die Ausgangsleitung bei einer annähernd konstanten Spannung gesteuert wird; und
Einstellen des Arbeitszyklus des DC-DC-Wandlers, um den Laststrom an der Ausgangsleitung zu maximieren; und wobei:
der Maximiervorgang des Laststroms unabhängig von einer Spannung der Ausgangsleitung ist; und
die DC-DC-Wandlerschaltung konfiguriert ist, um nur eine einzelne Variable eines Laststromausgangs von dem Leistungskonditionierer zu steuern, um den Laststromausgang von der Leistungskonditionierschaltung zu maximieren.

11. Verfahren nach Anspruch 10, ferner umfassend:
Erfassen einer Oszillation des Laststroms an der Ausgangsleitung bewirkt durch das Dithern des Arbeitszyklus, wobei:
ein Laststrom, dessen Oszillation in Phase mit dem Ditherzyklus ist, ein Unterschreiten vor dem maximalen Strompunkt mit einer zugehörigen positiven Rückkopplung zu einer Arbeitszyklussteuerung (224) darstellt, um den Arbeitszyklus zu erhöhen;
ein Laststrom, dessen Oszillation außer Phase mit dem Ditherzyklus ist, ein Überschreiten über den maximalen Strompunkt hinaus mit einer zugehörigen positiven Rückkopplung zu einer Arbeitszyklussteuerung (224) darstellt, um den Arbeitszyklus zu reduzieren; und
ein Laststrom, dessen Oszillation ein Durchschnitt von Null ist, einen Betrieb bei dem maximalen Strompunkt darstellt, der den maximalen Laststrom mit einer zugehörigen Nullrückkopplung produziert, um den aktuellen Arbeitszyklus beizubehalten.

12. Verfahren nach Anspruch 11, ferner umfassend:
kontinuierliches Integrieren der Rückkopplung von der Arbeitszykluseinstellungsschaltung, um sich ändernde Betriebsbedingungen der DC-Leistungsquelle unterzubringen; und
Einstellen des Arbeitszyklus der Arbeitszyklussteuerung auf Grundlage des Integrationsvorgangs des Rückkopplungssignals, um den Laststrom bei dem maximalen Strompunkt zu halten.

13. Verfahren nach Anspruch 10, ferner umfassend:
Synchronisieren eines Rückkopplungssignals durch Verzögern des Rückkopplungssignals für eine Menge an Zeit, die mit einer Antwortzeit der DC-Leistungsquelle vergleichbar ist.

14. Verfahren nach Anspruch 10, ferner umfassend:
gelegentliches Erhöhen der Amplitude des Dithers, um zu identifizieren, ob ein globales Maximum über ein lokales Maximum hinaus vorhanden ist.

## Revendications

1. Circuit de conditionnement d'énergie (104) destiné à conditionner l'énergie reçue d'une source d'énergie en courant continu (CC) (102), ledit circuit de conditionnement d'énergie comprenant :
une ligne d'entrée couplée pour recevoir de l'énergie en provenance de la source d'énergie en CC ; une ligne de sortie pour délivrer en sortie de l'énergie à une charge de bus externe (106), ladite ligne de sortie étant commandée à une tension approximativement fixe ;
et un circuit de conversion continu-continu (CC-CC) (221) couplant la ligne d'entrée à la ligne de sortie et conçu pour fournir un courant de charge à la charge de bus externe afin de générer une énergie de sortie maximale pour la charge de bus externe sans demander à l'ensemble de circuits d'effectuer un calcul d'énergie ;
et ledit circuit de conversion CC-CC étant conçu pour maximiser le courant de charge indépendamment d'une tension de la ligne de sortie ;
et le circuit de conversion CC-CC étant conçu pour commander uniquement une seule variable d'un courant de charge délivré en sortie du conditionneur d'énergie afin de maximiser le courant de charge délivré en sortie du circuit de conditionnement d'énergie.

2. Circuit selon la revendication 1, ladite énergie de sortie maximale générée par le circuit de conversion CC-CC étant fournie à la charge de bus externe sans nécessiter un capteur dédié pour mesurer un courant ou une tension de la source d'énergie CC.

3. Circuit selon la revendication 1, ledit convertisseur CC-CC comprenant en outre :
un circuit de commande de cycle de service (DCCC) (224) conçu pour moduler un point de fonctionnement de la source d'énergie CC en faisant varier un cycle de travail modulé en largeur d'impulsion (PWM) qui à son tour fait varier le courant de charge qui est délivré en sortie sur la ligne de sortie ;
un circuit de réglage de cycle de service (DCAC) (460) couplé au circuit de commande de cycle de service, ledit circuit DCAC étant en outre conçu pour définir un cycle de service initial puis perturber le cycle de service du signal PWM ;
et un circuit de rétroaction couplé au circuit de réglage du cycle de service, ledit circuit de rétroaction détectant une oscillation de phase et d'amplitude du courant de charge provoquée par le cycle de service perturbé continuellement, ledit circuit de rétroaction étant conçu pour fournir un signal d'erreur au circuit de réglage du cycle de service pour régler le cycle de service afin de suivre le point de fonctionnement de courant de charge maximal.

4. Circuit selon la revendication 3, ledit circuit de rétroaction utilisant des composants analogiques pour régler le cycle de service sans avoir à effectuer de calcul d'énergie et générant le signal d'erreur en intégrant les oscillations de phase et d'amplitude du courant de charge corrélé au signal de perturbation d'origine.

5. Circuit selon la revendication 1, comprenant en outre :
un réseau de compensation/retard disposé dans le circuit de rétroaction, ledit réseau de compensation/retard étant conçu pour synchroniser le signal de rétroaction.

6. Circuit selon la revendication 1, comprenant en outre :
un transformateur d'isolation couplé entre le circuit de conversion CC-CC et la ligne de sortie, le transformateur d'isolation étant destiné à augmenter la tension de sortie du convertisseur CC-CC à la tension approximativement fixe de la ligne de sortie et le transformateur d'isolation assurant une fonction d'isolation de la source d'énergie CC de la ligne de sortie.

7. Système générateur d'énergie comprenant :
une source d'énergie CC (102) ;
et un circuit de conditionnement d'énergie (104) selon la revendication 1.

8. Système selon la revendication 7, comprenant en outre :
un système récepteur de charge à tension constante couplé à la ligne de sortie du système générateur d'énergie, ledit système récepteur de charge faisant varier le courant d'appel de charge de sorte qu'une tension de ligne de sortie soit maintenue à la tension approximativement fixe.

9. Système selon la revendication 7, comprenant en outre :
une pluralité de sources d'énergie CC couplées en parallèle à un bus CC, chaque source d'énergie CC de la pluralité de sources d'énergie CC comprenant un conditionneur d'énergie local dédié.

10. Procédé de conditionnement d'énergie provenant d'une source d'énergie CC vers une ligne de sortie à l'aide d'un conditionneur d'énergie, le procédé comprenant :
la réception (702) d'un courant en provenance de la source d'énergie CC ;
la coupure (704) du courant au niveau d'un cycle de service à l'aide d'un convertisseur CC-CC ;
la sortie (706) d'un courant de charge sur la ligne de sortie, ladite ligne de sortie étant commandée à une tension approximativement constante ;
et le réglage du cycle de service du convertisseur CC-CC pour maximiser le courant de charge sur la ligne de sortie ;
et
ladite opération de maximisation du courant de charge étant indépendante d'une tension de la ligne de sortie ;
et le circuit de conversion CC-CC étant conçu pour commander uniquement une seule variable d'un courant de charge délivré en sortie du conditionneur d'énergie afin de maximiser le courant de charge délivré en sortie du circuit de conditionnement d'énergie.

11. Procédé selon la revendication 10, comprenant en outre :
la détection d'une oscillation du courant de charge sur la ligne de sortie provoquée par la perturbation du cycle de service,
un courant de charge dont l'oscillation étant en phase avec le cycle de perturbation représentant un sous-dépassement avant le point de courant maximal avec une rétroaction positive associée d'une commande de cycle de service (224) pour augmenter le cycle de service ;
un courant de charge dont l'oscillation étant déphasée par rapport au cycle de perturbation représentant un dépassement au-delà du point de courant maximal avec une rétroaction positive associée d'un dispositif de commande de cycle de service (224) pour réduire le cycle de service ;
et un courant de charge dont l'oscillation est une moyenne de zéro représentant un fonctionnement au point de courant maximal qui produit le courant de charge maximal avec une rétroaction nulle associée pour maintenir le cycle de service actuel.

12. Procédé selon la revendication 11, comprenant en outre :
l'intégration de manière continue de la rétroaction provenant du circuit de réglage de cycle de service pour s'adapter aux conditions de fonctionnement changeantes de la source d'énergie CC ; et le réglage du cycle de service du dispositif de commande de cycle de service, sur la base de l'opération d'intégration du signal de rétroaction de façon à maintenir le courant de charge au point de courant maximal.

13. Procédé selon la revendication 10, comprenant en outre :
la synchronisation d'un signal de rétroaction en retardant le signal de rétroaction d'une quantité de temps comparable au temps de réponse de la source d'énergie CC.

14. Procédé selon la revendication 10, comprenant en outre :
l'augmentation de manière occasionnelle de l'amplitude de la perturbation pour identifier si un maximum global existe au-delà d'un maximum local.
